# EUROPEAN PATENT APPLICATION

(11) **EP 0 626 228 A1**
(43) Date of publication of application: **30.11.1994**
(21) Application number: 94303492.6
(22) Date of filing: 16.05.1994
(51) Int. Cl.: B23K 26/00, B29C 59/00

(54) **Surface modification**

(30) Priority: 26.05.1993 GB 9310820
(71) Applicant: THE WELDING INSTITUTE, Abington Cambridge CB1 6AL (GB)
(72) Inventor: Dance, Bruce Guy Irvine, Cambridge CB4 2DD (GB)
(74) Representative: Skone James, Robert Edmund

(57) **Abstract**

A method of modifying the surface of a workpiece (2) which is to be joined to another member. The method comprises exposing a series of locations on the workpiece surface to a power beam (1) whereby at each location workpiece material (4) is melted and spaced laterally under the influence of the power beam and then allowed to solidify so as to form a cavity (3) surrounded by an area of solidified material which is raised with respect to the workpiece surface and has a re-entrant profile.

## Description

This invention relates to modifying or preparing the surface topography of a workpiece or parent material in order to increase the degree of mechanical friction or the degree of mechanical interlock with respect to another material or body.

Various methods have been used to increase the surface roughness of materials which have been made relatively smooth by machining, polishing, forming against a flat mould and so forth. These roughening methods include surface deformation by mechanical means such as grooving or knurling, or chemical means such as etching.

Alternatively, material has been added to the parent material surface by means, for example, of arc welding with a consumable filler wire. In one example small drops of metal have been deposited onto a metal surface, utilising the consumable electrode gas metal arc (GMA) process in which the current is modulated such that molten drops are detached from the melting wire electrode in a discrete and regular manner. These drops serve as raised dimples on the otherwise relatively smooth parent material surface and have been used to reduce the tendency to slip between the parent and another body.

In accordance with the present invention, a method of modifying the surface of a workpiece which is to be joined to another member comprises exposing a series of locations on the workpiece surface to a power beam whereby at each location workpiece material is melted and spaced laterally under the influence of the power beam and then allowed to solidify so as to form a cavity surrounded by an area of solidified material which is raised with respect to the adjacent workpiece surface and has a re-entrant profile.

Thus, suitable raised portions or dimples with re-entrant profiles are generated on the otherwise comparatively smooth material surface from the parent material by rapidly smelting small localised regions by means of a (typically focused) power beam such as an electron beam impinging on the parent material. The high power density beam is rapidly moved from point to point to produce a series of such raised dimples. By closely spacing the dimples a semi-continuous line or ridge can be produced. It is noted that the raised material comes from melting and displacing the molten material, thus leaving a small cavity in the parent. Some material may be lost by vaporisation under the high power density of the applied beam.

In use, when the workpiece is adhered to another member, both the cavity and the raised dimple can contribute to mechanical interlock.

The re-entrant profile further increases the mechanical forces required to separate the parent from, or slide the parent over, another member.

The re-entrant profile is beneficial in retaining, for example, an adhesive, especially an adhesive which does not itself bond to the parent, or only bonds with a low strength. Alternatively the bond strength between a non-adherent material, e.g. a low friction polymer, and the parent material surface may be increased substantially by the interlocking nature of the re-entrant profile.

In addition, the processed surface is substantially cleaned and freed from any minor contamination by the action of the beam, this increasing the bond strength obtained with any subsequent adhesive bonding operation.

Where a series of closely spaced dimples form a semi-continuous ridge, this ridge preferably also has a re-entrant profile.

For the purposes of increasing the overall bond strength of an adhesive, it is also noted that the adhesive preferably also enters the cavity as well as the re-entrant surface on the dimple to increase its bonding shear strength.

Preferably the surface topography utilises the existing parent material so no additional material is deposited onto the parent. The technique of changing the surface topography relies on utilising the melting/vaporisation capability of a power beam or high power density heat source typically brought to a focus in the region of the work surface.

In the preferred example, the power beam comprises an electron beam. Typically, this will be generated in a conventional manner using a conventional electron gun, the beam being moved across the workpiece under computer control using a technique similar to that described in US-A-5151571 incorporated herein by reference. Typically, the power and speed of movement of the beam is such that more than 500 cavities per second are formed, preferably up to 580 or more cavities per second. The relative speed of movement between the beam and the workpiece is typically up to 1km/s while the transit time between cavities is typically 1/100th of the dwell time at each cavity.

The peak power density of the electron beam is typically in the range 10⁵-10⁷W/mm².

The method of melting and vaporising discrete zones in the parent material by means of a high power density beam should be distinguished from the well known technique of hole punching or drilling. For the latter the object is to maximise the vaporisation, with the minimum of resultant melt to provide a hole with minimum deformation or obstruction. For this the power density in the beam is made as high as possible in the centre, and as low as possible in the fringe region surrounding the central portion. It is common practice to improve the power distribution in such beams by means of diaphragms and the like to cut off the fringe regions and hence increase the relative intensity of the central region.

In contrast, in the present invention, it is desirable to ensure a sufficient degree of energy in the regions away from the central portion to enhance the melting of the edges of the melt spot or cavity in the parent material and to promote the welding or joining of such molten material to the parent. For this the power in the beam at its smallest diameter or focus is distributed such that a significant proportion, if not a major proportion, occurs in the outer regions of the focus. For an electron beam at focus the beam current in the central one third of its diameter can be compared with the remainder in the annulus surrounding the centre.

Preferably the current in the annulus is at least half the current in the central portion, and more especially at least equal to the central current. Satisfactory results are obtained when the current in the annulus is twice or even three times the central current, depending on the parent material and type of dimple desired.

In other applications, other power beams could be used, for example a laser. With a laser, typically a slightly higher net energy is required per cavity in contrast to an electron beam, owing to the reduced coupling efficiency with the workpiece. Actual laser pulse durations may be shorter than with electron beams, and correspondingly the peak energy density may be slightly higher. Cavities of similar size have been produced at a rate of 20 per second using a 300W mean output pulsed CO₂ laser, giving about 15 joules per cavity.

Typically, the cavities have a maximum diameter of substantially 0.6mm and a depth in the range 0.6-1mm. In the preferred case, the cavity pitch is about 1mm.

The dimensions of each cavity set out above will be reduced by the intrusion of remelted material so producing the re-entrant feature.

In some cases, the cavities can have a substantially similar form and can then be arranged in either a cubic or close-packed arrangement. However, cavities of variable size may be produced allowing other patterns of cavities to be formed.

Typically, the workpiece is any metal or other material which can be melted or vaporized by the power beam. An example is steel.

In accordance with a second aspect of the present invention, a method of joining a workpiece to another member comprises preparing a surface of the workpiece using a method according to the first aspect of the invention; and adhering another member to the prepared surface of the workpiece.

This method is useful in a number of applications. In particular, the other member can be any polymer or other material which can be successfully introduced by any combination of pressure, heat or chemical reaction into the cavities in a chosen substrate or workpiece. For example, the other member could comprise one of nylon, PTFE, PMMA, aluminium and its alloys, phenolic resins, and magnesium and its alloys.

Examples of important applications of the invention include adhering brake pads to metal brake pad backings; bonding low friction polymers to corrosion-resistant metals for manufacture of prosthetic devices, for example hip joints etc; bonding of rubber to steel or other metals, for example for manufacture of impact-absorbing buffers; and bonding of aluminium to steel or cast iron, for example for the manufacture of lightweight brake disks.

Some examples of methods according to the invention will now be described with reference to the accompanying drawings, in which:
Figures 1a-1e show successive stages in the formation of a cavity with a re-entrant feature;
Figure 2 shows a plan view of an electron beam textured surface in steel, containing many re-entrant features;
Figure 3 shows an example of an electron beam power density distribution;
Figure 4 illustrates schematically apparatus for carrying out the method;
Figure 5 illustrates part of a second example of apparatus for carrying out the method;
Figure 6 illustrates the apparatus of Figure 5 in more detail; and,
Figures 7A-7C illustrate three different arrangements of cavities.

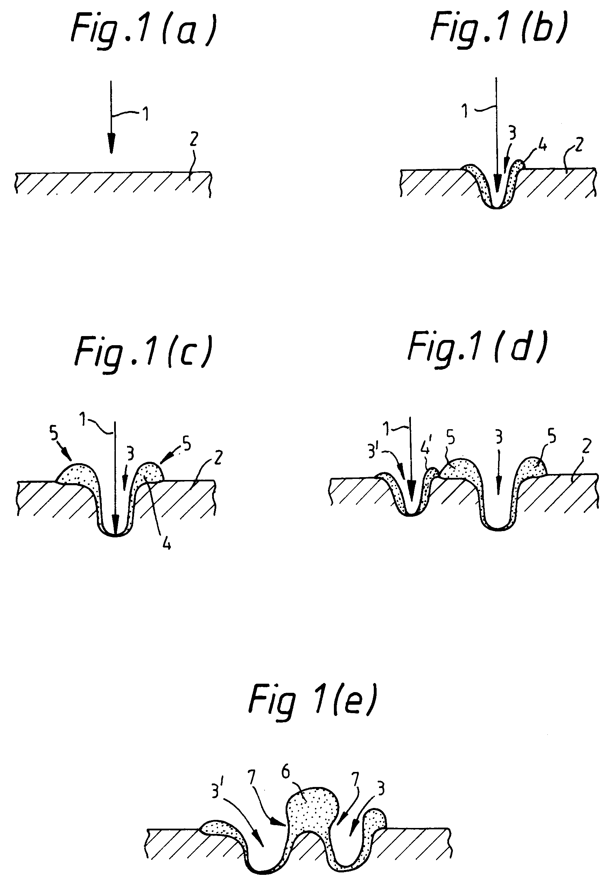

Figures 1a-1e illustrate successive stages in the formation of a cavity with a re-entrant surface feature. At the start, an electron or laser beam 1 impinges on a substrate such as a steel workpiece 2. Subsequently (Figure 1b) a cavity 3 begins to form with molten material 4 being displaced laterally outwardly. After further exposure, more molten material 4 is displaced to form an extended molten zone 5 at the surface. The beam 1 then moves to a second location and begins to form a second cavity 3' (Figure 1d) thus displacing further molten material 4'. This further molten material 4' overlaps with the previous material in an adjacent zone 5 and then subsequently solidifies into a quasi-spherical profile under the forces of surface tension as indicated at 6 in Figure 1e thus forming the re-entrant feature 7.

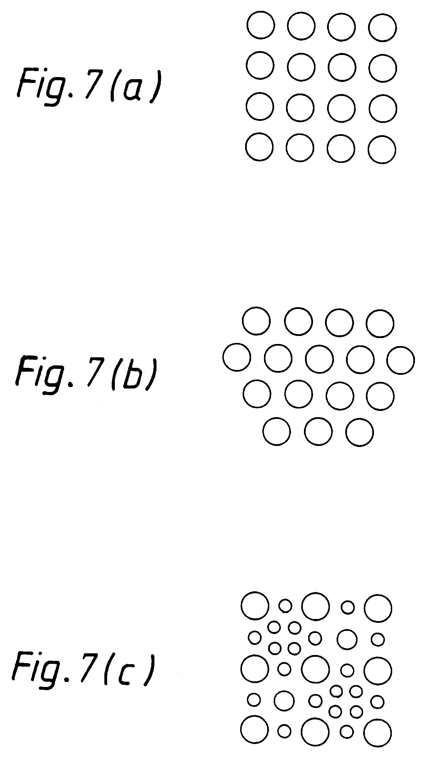

In general, each cavity will have a similar shape and form and the cavities may be arranged as shown in Figures 7A (cubic) or 7B (close-packed). However, it is not essential for the cavities to be the same size and, as shown in Figure 7C, a variety of different sizes allow a higher pattern density to be achieved.

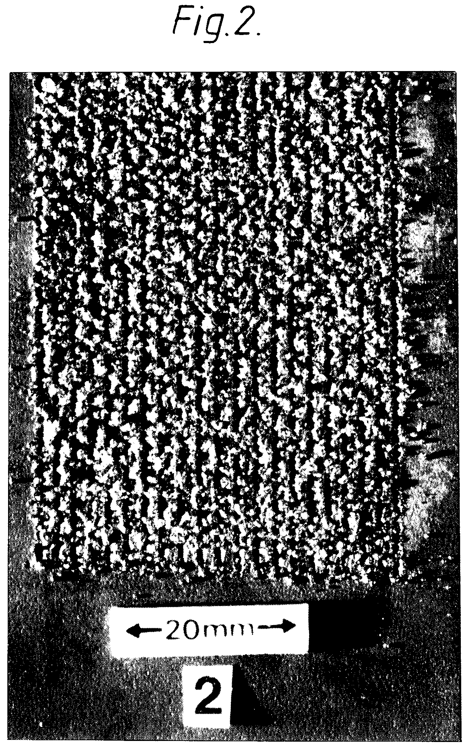

Figure 2 shows the result of a steel surface which has been textured using an electron beam and having many re-entrant features. It is to be noted that they present a series of ridges.

Typical parameters for the electron beam are as follows:
For texturing of steel, with a beam of 140kV acceleration potential, and 42mA beam current, giving a power of ∼5.8kW, the beam would be focused to a diameter of ∼0.4mm and would make ∼580 holes/sec in the workpiece. In this case, the peak beam power density would be in the region of 10⁵-10⁷W/mm². Each hole would be made with ∼10 joules energy, in ∼1.7ms. The transit time of the beam from one hole position to the next is typically 1/100th of the dwell time at the hole position, i.e. in this case ∼17µs. Since the beam may be travelling at speeds of ∼1km/s over the workpiece surface, it need not be switched off or reduced in power whilst in transit, as no surface melting or other damage is likely at these scanning speeds in any event.

In steel, cavities produced with 10 joules are ∼0.6mm depth below the original surface. These dimensions are reduced in each cavity by the intrusion of re-melted material, so giving the re-entrant features. The pitch of the cavities would typically be ∼1mm.

Similar cavities may be produced with lasers; typically a slightly higher net energy is required per cavity, owing to the reduced coupling efficiency with the substrate. Actual laser pulse durations may be shorter than with electron beam, and correspondingly the peak energy density may be slightly higher. Cavities of similar size have been produced at a rate of 20 per second using a 300W mean output pulsed CO₂ laser, giving ∼15 joules per cavity.

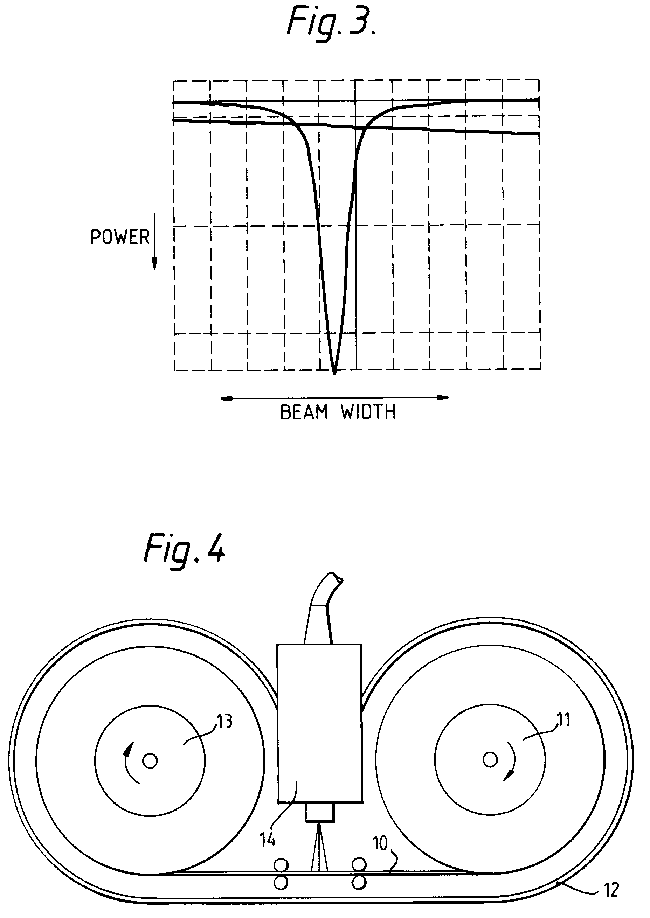

In the preferred example, the power distribution across the electron beam 1 has a form similar to that shown in Figure 3 which is based on a 5kw electron beam. Thus, there is a relatively high peak power density at the centre with a diameter of about 0.6mm but a significant fringe power region. The width of the beam at half maximum is 0.25-0.3mm.

In the case of an electron beam, many different types of electron beam guns could be used to generate the beam. In a typical electron gun, a cathode of refractory metal is heated to ∼2000°C in a vacuum of 10⁻⁵ to 10⁻⁶mbar. A potential of 30-150kV accelerates the beam through a hollow anode. In a triode gun, the beam current is controlled by a third "bias" or "Welnhelt" electrode. In a diode gun, the beam current is controlled by the temperature of the cathode alone.

The beam passes through a system of magnetic lenses etc. which may incorporate a magnetic trap (a device that can protect the gun from the ingress of unwanted material), and deflection coils which can manipulate the beam at high speed. The working environment of beam may be a vacuum of as little at 10⁻¹mbar, typically 5 x 10⁻³mbar. The vacuum level has an effect on beam quality and intensity.

Cathodes can be either directly heated or indirectly heated. Directly heated cathodes require replacement at intervals of (say) 10-100 hours, an operation which takes (typically) ∼15 minutes to accomplish. Indirectly heated cathodes are far more long lived, typically operating for hundreds of hours before requiring replacement.

Beam quality can be monitored in real-time by use of (say) a slit probe device. This has the potential to be linked to the electron beam control systems as an automatic system.

In one example, the workpiece can be processed as a continuous strip using a conventional air-to-vacuum-to-air system which has been successfully built for applications such as the manufacture of saw blades, in bimetal strips etc.

An alternative approach is to process reels of strip material individually (Figure 4), so that the blank material 10, on a reel 11, is loaded into a specially designed vacuum chamber 12, together with an empty take-up reel 13. These reels 11,13 would necessarily be quite large in diameter if the material is not to take a "set". For example, the minimum pure bend radius to give 0.2% strain in 7mm thickness material is 1750mm. A reel with a radius of 2.5m would therefore be able to hold up to 6 tonnes of 80mm wide strip - a length of 1.4km. With a 5kW gun 14, a 1m/min processing speed is possible, meaning that such a reel would take about 24 hours to process. However, if texturing speed is increased proportionately to gun power the with a 50kW gun, processing at 10m/min, such a reel would be processed in ∼2½ hours.

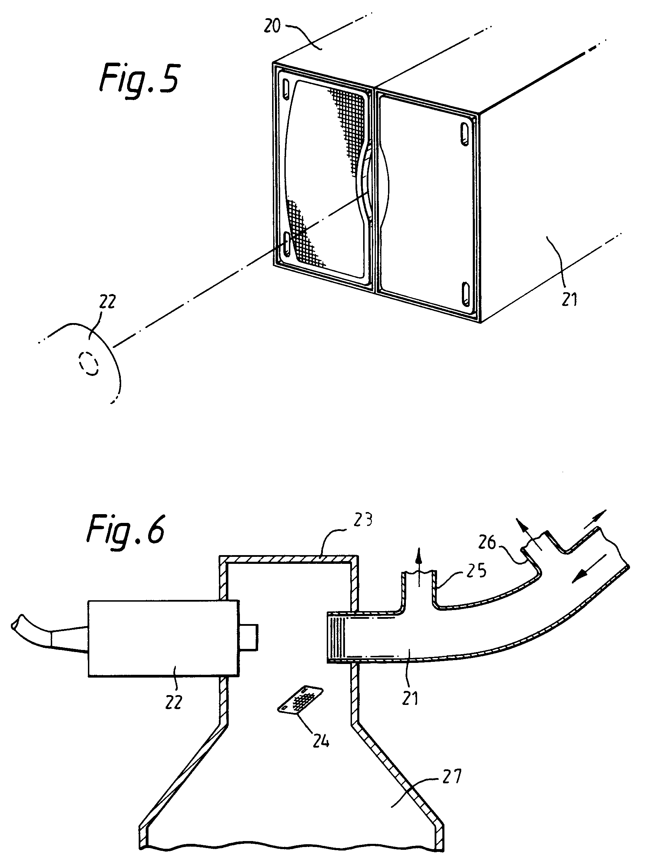

A preferred route, however, from the point of view of integrating the electron texturing technique with existing production practice, would be to texture individual workpieces such as brake pad backing plates (PBP). An example of apparatus for achieving this is shown in Figures 5 and 6. Two chutes 20,21 are mounted side by side (only one shown in Figure 6) and two stacks of PBPs are fed down the chutes towards an electron gun column 22 such that both lie within a deflection field. The outlets of the chutes 20,21 are located in an evacuated chamber 23. Whilst one PBP is being removed after processing, the other is being processed. This means that the available beam power can be utilised fully by being operated continuously. In addition, unlike other techniques, this would readily enable each PBP to be selectively textured only when it is required. Texturing selected areas of conventional PBPs with holes in already would also be possible.

In practice, stacks of PBPs could be loaded continuously into each chute so that the chute's sidewalls act as an effective vacuum seal. To facilitate this, every 100th PBP or so could be a blank dummy, exactly fitting the chute dimensions perhaps with the assistance of an "O" ring to maintain a vacuum seal. Air exits from the chutes as shown at 25,26 are provided to maintain vacuum, the exits being connected to a vacuum pump (not shown).

After texturing, the PBPs could simply fall into a hopper 27 which would be emptied at regular intervals.

Once a workpiece with a prepared surface has been formed, it can then be joined using adhesive to another member in a conventional manner. As previously explained, the textured surface will considerably enhance and strengthen the joint and indeed will enable certain materials to be joined using adhesive which previously could not be joined.

## Claims

1. A method of modifying the surface of a workpiece which is to be joined to another member, the method comprising exposing a series of locations on the workpiece surface to a power beam whereby at each location workpiece material is melted and spaced laterally under the influence of the power beam and then allowed to solidify so as to form a cavity surrounded by an area of solidified material which is raised with respect to the adjacent workpiece surface and has a re-entrant profile.

2. A method according to claim 1, wherein the power beam comprises an electron beam or a laser beam.

3. A method according to claim 2, wherein cavities are formed in a workpiece at a rate of at least 500 per second.

4. A method according to claim 3, wherein cavities are formed in the workpiece at a rate of at least 580 per second.

5. A method according to any of the preceding claims, wherein the power beam moves relative to the surface of the workpiece at a rate of about 1km/s.

6. A method according to any of the preceding claims, wherein the transit time between locations is about 1/100th of the dwell time at each location.

7. A method according to any of the preceding claims, wherein the peak power beam density is in the range 10⁵-10⁷W/mm².

8. A method according to any of the preceding claims, wherein current in the power beam is distributed across the diameter of the beam such that the current in an annulus of the power beam surrounding a central region of the power beam, the central region having a lateral dimension substantially equal to one third of the beam diameter, is at least half the current in the central region.

9. A method according to claim 8, wherein the current in the annulus is at least equal to the current in the central region.

10. A method according to claim 9, wherein the current in the annulus is two or three times the current in the central region.

11. A method according to any of the preceding claims, wherein the cavities have a maximum diameter of about 0.6mm.

12. A method according to any of the preceding claims, wherein the cavities have depths in the range 0.6-1mm.

13. A method according to any of the preceding claims, wherein the cavities are spaced apart with a pitch of about 1mm.

14. A method according to any of the preceding claims, wherein the cavities are all of substantially the same size.

15. A method according to claim 14, wherein the cavities are arranged in a cubic or close-packed array.

16. A method according to any of the preceding claims, wherein the workpiece comprises a metal.

17. A method according to claim 16, wherein the workpiece comprises a brake pad backing plate.

18. A workpiece whose surface has been modified by a method according to any of the preceding claims.

19. A method of joining a workpiece to another member, the method comprising modifying the surface of the workpiece using a method according to any of claims 1 to 18; and adhering the other member to the prepared surface of the workpiece.

20. A method according to claim 19, wherein the other member comprises a polymer.

21. A method according to claim 19, wherein the other member is made of one of nylon, PTFE (polytetrafluoroethylene), PMMA (polymethylmethacrylate), polyurethane, aluminium and its alloys, phenolic resins, and magnesium and its alloys.

22. A method according to claim 19, wherein the other member comprises a brake pad.
